# EUROPÄISCHE PATENTSCHRIFT

(11) **EP 2 289 766 B1**
(45) Veröffentlichungstag und Bekanntmachung des Hinweises auf die Patenterteilung: **29.11.2017**
(21) Anmeldenummer: 10008707.1
(22) Anmeldetag: 20.08.2010
(51) Int. Cl.: B62D 5/04, B62D 7/02, B62D 15/02, B66F 9/075

(54) **Antriebs- und Lenkvorrichtung für ein Flurförderzeug**
Drive and steering device for an industrial truck
Dispositif d'entraînement et de direction pour un chariot de manutention

(30) Priorität: 01.09.2009 DE 102009040043
(43) Veröffentlichungstag der Anmeldung: 02.03.2011
(73) Patentinhaber: Jungheinrich Aktiengesellschaft, 22047 Hamburg (DE)
(72) Erfinder: Röder, Matthias, 22523 Hamburg (DE)
(74) Vertreter: Hauck Patentanwaltspartnerschaft mbB

(56) Entgegenhaltungen:
- EP-A2- 1 808 323
- EP-B1- 1 772 348

## Beschreibung

Die Erfindung bezieht sich auf eine Antriebs- und Lenkvorrichtung für ein Flurförderzeug mit einem Antriebsrad, das in einer Antriebsradaufhängung, die um eine vertikale Achse schwenkbar gelagert ist, drehbar aufgehängt ist, einer Lenkeinrichtung, die einen Lenker und ein Lagerbauteil aufweist, das koaxial oder achsparallel zur Antriebsradaufhängung schwenkbar gelagert ist, und einer Lenkwinkeleinrichtung, die einen Sensor, der einen Differenzwinkel zwischen der Antriebsradaufhängung und dem Lagerbauteil erfasst, und einen Lenkantrieb aufweist, mit dem die Antriebsradaufhängung nach Maßgabe des erfassten Differenzwinkels schwenkbar ist.

Eine derartige Antriebs- und Lenkvorrichtung ist aus dem europäischen Patent EP 1 772 348 B1 bekannt. Bei der bekannten Vorrichtung weist der Sensor ein Ritzel auf und ist an einem von einer Feder vorgespannten Arm an dem Lagerbauteil schwenkbar befestigt. Die Feder spannt den Sensor mit dem Ritzel in Richtung zu einem bezüglich der Antriebsradaufliängung fest angeordneten Zahnkranz vor. Durch den Eingriff zwischen diesem Zahnkranz und dem Ritzel wird das Ritzel bei einer Relativbewegung zwischen dem Lagerbauteil und der Antriebsradaufliängung gedreht. Die Regeleinrichtung führt die Bewegung der Antriebsradaufliängung einer Bewegung des Lagerbauteils so nach, dass der Differenzwinkel einen Nullwert annimmt.

Davon ausgehend ist es die Aufgabe der Erfindung, eine Antriebs- und Lenkvorrichtung für ein Flurförderzeug der eingangs genannten Art zur Verfügung zu stellen, die einfacher und kompakter aufgebaut, einfacher zu montieren, robuster und unempfindlicher gegen Verschleiß und Verschmutzung ist.

Diese Aufgabe wird gelöst durch die Antriebs- und Lenkvorrichtung für ein Flurförderzeug mit den Merkmalen des Anspruchs 1. Vorteilhafte Ausgestaltungen sind in den sich anschließenden Unteransprüchen angegeben.

Die erfindungsgemäße Antriebs- und Lenkvorrichtung für ein Flurförderzeug hat:
- ein Antriebsrad, das in einer Antriebsradaufhängung, die um eine im Wesentlichen vertikale Achse schwenkbar gelagert ist, drehbar aufgehängt ist,
- eine Lenkeinrichtung, die einen Lenker und ein Lagerbauteil aufweist, das koaxial oder achsparallel zur Antriebsradaufhängung schwenkbar gelagert ist, und
- eine Lenkwinkelregeleinrichtung, die mindestens einen Sensor, der bezüglich der Antriebsradaufhängung oder des Lagerbauteils fest angeordnet ist und einen Differenzwinkel zwischen der Antriebsradaufhängung und dem Lagerbauteil erfasst, und einen Lenkantrieb aufweist, mit dem die Antriebsradaufhängung nach Maßgabe des erfassten Differenzwinkels schwenkbar ist, und
- einen Sensorarm, der drehfest mit einer Sensorwelle des mindestens einen Sensors verbunden ist, sowie
- ein Gegenstück, das bezüglich des Lagerbauteils bzw. der Antriebsradaufhängung fest angeordnet ist und mit dem Sensorarm derart zusammenwirkt, dass der Sensorarm mit der Sensorwelle bei einer Relativbewegung zwischen dem Lagerbauteil und der Antriebsradaufhängung gedreht wird.

Antriebsrad und Antriebsradaufhängung können Teile einer Antriebseinheit sein, die zusätzlich einen Antriebsmotor und/oder ein Getriebe aufweist. Dann kann die gesamte Antriebseinheit um die im Wesentlichen vertikale Achse schwenkbar gelagert sein. Um eine im Wesentlichen vertikale Achse schwenkbar bedeutet, dass die Antriebsradaufhängung mit dem Antriebsrad eine Lenkbewegung ausführen kann. Im Falle eines Radsturzes braucht die vertikale Achse hierzu nicht vollständig vertikal ausgerichtet zu sein, auch eine geringfügige Neigung gegenüber der Vertikalen ist möglich. Das Antriebsrad ist um eine horizontale Achse drehbar in der Antriebsradaufhängung aufgehängt. Die Antriebsradaufhängung kann beispielsweise ein Drehschemel sein, mit einem oder zwei sich nach unten erstreckenden Beinen an dem bzw. zwischen denen das Antriebsrad angeordnet ist.

Bei einem deichselgeführten Flurförderzeug kann die Lenkeinrichtung als Lenker eine Deichsel und als Lagerbauteil einen Lagerbock aufweisen, der mit der Deichsel verbunden ist, wobei die Deichsel um eine horizontal angeordnete Achse schwenkbar ist und einen Deichselfuß und einen Deichselkopf aufweist. Der Lenker kann jedoch auch ein sonstiger von Hand zu bedienender Lenker sein und/oder gegebenenfalls über ein Getriebe, etwa eine Kette oder einen Zahnriemen, auf das schwenkbare Lagerbauteil wirken. Der Lenker braucht insbesondere nicht um dieselbe Achse schwenkbar gelagert zu sein wie das Lagerbauteil.

Der mindestens eine Sensor kann an der Antriebsradaufhängung oder an dem Lagerbauteil direkt oder indirekt, beispielsweise über ein weiteres Element wie ein Gehäuse eines Antriebsmotors und/oder über einen Halter, befestigt sein. Dass der Sensor einen Differenzwinkel zwischen der Antriebsradaufhängung und dem Lagerbauteil erfasst, bedeutet, dass anhand eines von dem Sensor ausgegebenen Werts auf diesen Differenzwinkel geschlossen werden kann. Dabei braucht der Drehwinkel der Sensorwelle nicht mit dem zu messenden Differenzwinkel überein zu stimmen. Der Lenkantrieb weist einen insbesondere elektrischen Lenkmotor auf und kann über über ein Getriebe, beispielsweise eine Zahnrad/Kettenanordnung, auf die Antriebsradaufhängung wirken. Die vom Lenkantrieb ausgeführte Drehung der Antriebsradaufhängung erfolgt nach Maßgabe des erfassten Differenzwinkels. Insbesondere kann die Lenkwinkelregeleinrichtung so ausgeführt sein, dass der Differenzwinkel auf Null oder einen sonstigen vorgegebenen Referenzwert geregelt wird.

Der Sensorarm ist drehfest mit der Sensorwelle verbunden und erstreckt sich von dieser ausgehend zumindest teilweise in radialer Richtung.

Wenn der Sensor bezüglich der Antriebsradaufhängung fest angeordnet ist, ist das Gegenstück bezüglich des Lagerbauteils fest angeordnet. Wenn der Sensor bezüglich des Lagerbauteils fest angeordnet ist, ist das Gegenstück bezüglich der Antriebsradaufhängung fest angeordnet. Das Gegenstück wirkt mechanisch mit dem Sensorarm zusammen, so dass der Sensorarm von dem Gegenstück bei einer Relativbewegung zwischen dem Lagerbauteil und der Antriebsradaufhängung ausgelenkt und die Sensorwelle entsprechend gedreht wird. Anhand der Drehung der Sensorwelle kann daher die Relativbewegung bzw. genauer der Differenzwinkel zwischen der Antriebsradaufhängung und dem Lagerbauteil erfasst werden.

Durch das Zusammenwirken des Sensorarms mit dem Gegenstück ist ein konstruktiv besonders einfacher Aufbau gefunden worden, der insbesondere eine feste Anordnung des Sensors und des Gegenstücks an der Antriebsradaufhängung bzw. dem Lagerbauteil ermöglicht. Eine raumgreifende, konstruktiv aufwendige und schwierig zu montierende Anordnung des Sensors an einem schwenkbaren, federvorgespannten Arm ist nicht erforderlich. Gegenüber der Zahnkranz/Ritzelanordnung aus dem Stand der Technik ist die Kombination aus Sensorarm und Gegenstück weniger verschmutzungsanfällig. Insbesondere führt eine Verschmutzung nicht, wie bei der Kombination aus Zahnkranz und Ritzel, unweigerlich zu einem erhöhten Spiel und damit Ungenauigkeiten bei der Erfassung des Differenzwinkels. Daher kann der Differenzwinkel unter Praxisbedingungen auch genauer erfasst werden.

In einer Ausgestaltung weisen Gegenstück und Sensorarm Führungsmittel auf, die eine Verschiebung des Gegenstücks gegenüber dem Sensorarm in bezüglich der Sensorwelle tangentialer Richtung verhindern. Hintergrund dieser Ausgestaltung ist, dass die Relativbewegung zwischen Antriebsradaufhängung und Lagerbauteil mit einer Relativbewegung zwischen dem Gegenstück und dem Sensor einhergeht, bei der sich der Abstand zwischen der Sensorwelle und dem Gegenstück ändert, beispielsweise in einer Längsrichtung des Sensorarms. Durch die Führungsmittel wird sichergestellt, dass es bei dieser Relativbewegung zwischen Gegenstück und Sensorarm nicht zu einer Bewegung des Sensorarms in bezüglich der Sensorwelle tangentialer Richtung, also in einer den von dem Sensor ausgegebenen Messwert beeinflussenden Richtung, kommt. Die Führungsmittel können beispielsweise eine Nut im Sensorarm und ein Stift am Gegenstück sein, der in der Nut geführt ist, oder umgekehrt. Eine andere Möglichkeit besteht in einer Klammer oder Hülse am Gegenstück, die einen Steg des Sensorarms oder den gesamten Sensorarm umgreift, oder umgekehrt. Oder umgekehrt bedeutet in diesem Zusammenhang, dass die Rollen von Gegenstück und Sensorarm vertauscht sein und die genannten Elemente am jeweils anderen dieser Teile ausgebildet sein können.

Gemäß einer Ausgestaltung weisen der Sensorarm und das Gegenstück jeweils mindestens eine Gleitfläche auf, wobei die mindestens eine Gleitfläche des Sensorarms mit der mindestens einen Gleitfläche des Gegenstücks in flächigem Kontakt steht. Grundsätzlich können Sensorarm und Gegenstück auch mittels eines punkt- oder linienförmigen Kontaktbereichs mechanisch zusammenwirken. Ein flächiger Kontakt ist jedoch weniger verschleißanfällig und bietet somit dauerhaft eine größere Genauigkeit.

In einer Ausgestaltung weisen die Führungsmittel einen Mitnehmerstift und eine Kulisse auf, wobei der Mitnehmerstift in der Kulisse beidseitig zwangsgeführt ist. Die Kulisse weist einen Schlitz oder eine Nut auf, in der der Mitnehmerstift geführt ist. Die Nut oder der Schlitz kann gradlinig oder gekrümmt sein. Kulisse und Mitnehmerstift stellen ein sicheres und spielarmes Zusammenwirken von Gegenstück und Sensorarm sicher.

Gemäß einer Ausgestaltung ist der Mitnehmerstift drehbar in einem Gleitstück gelagert. Das Gleitstück gleitet beidseitig zwangsgeführt in der Kulisse, wobei bevorzugt ein flächiger Kontakt zwischen Gleitstück und Kulisse anhand von jeweils zwei zusammenwirkenden Gleitflächen vorgesehen ist. Diese Anordnung ist wenig verschleißanfällig und ermöglicht gleichzeitig die erforderliche Drehbewegung zwischen Gegenstück und Sensorarm.

Gemäß einer Ausgestaltung weist die Kulisse eine einseitig geschlossene Nut auf, in die der Mitnehmerstift und/oder das Gleitstück auf der geöffneten Seite eingreift. Die geöffnete Seite kann insbesondere nach unten gerichtet sein. Diese Anordnung wirkt einer Verschmutzung der Nut entgegen.

Gemäß einer Ausgestaltung weist das Gleitstück eine Erweiterung auf, die orthogonal zu dem Mitnehmerstift angeordnet ist und eine Öffnung der Kulisse, in die der Mitnehmerstift und/oder das Gleitstück eingreift, abdeckt. Die Erweiterung kann insbesondere scheiben- oder plattenförmig sein. Die Öffnung der Kulisse kann insbesondere die Nut oder der Schlitz der Kulisse sein. Durch die Abdeckung von der Erweiterung des Gleitstücks wird die Nut oder der Schlitz und damit die Führungsflächen der Kulisse weiter vor einer Verschmutzung geschützt. Die Erweiterung kann insbesondere in einer Längsrichtung der Kulisse so bemessen sein, dass die Öffnung bei allen im Betrieb vorkommenden Anordnungen des Gleitstücks bezüglich der Kulisse vollständig abgedeckt ist.

Gemäß einer Ausgestaltung ist die Erweiterung seitlich von Stegen an dem die Kulisse aufweisende Führungsmittel umschlossen. Insbesondere können zwei im Wesentlichen in Richtung der Relativbewegung zwischen Gleitstück und Kulisse angeordnete Stege vorhanden sein. Durch die Stege wird ein zu der Öffnung der Kulisse führender Schlitz zwischen Gleitstück und dem die Kulisse aufweisenden Führungsmittel verdeckt, so dass das Eindringen von Verunreinigungen besonders wirksam verhindert wird.

Gemäß einer Ausgestaltung ist das Gegenstück bezüglich des Sensorarms entlang einer Geraden verschieblich, die in einem seitlichen Abstand von der Sensorwelle verläuft. Bei einer Verschiebung des Gegenstücks gegenüber dem Sensorarm, insbesondere in einer Längsrichtung des Sensorarms, kann das Gegenstück oder ein Teil des Gegenstücks, insbesondere eine über den Kontaktbereich zwischen Gegenstück und Sensorarm überstehende Erweiterung, seitlich an der Sensorwelle vorbeigeführt werden. Dadurch kann das Gegenstück nahe der Sensorwelle angeordnet werden, was einen besonders kompakten Aufbau ermöglicht.

In einer Ausgestaltung ist der Sensorarm auf die Sensorwelle aufgeschoben und von einer bezüglich des Sensors fest angeordneten Begrenzungsfläche gegen ein Abrutschen von der Sensorwelle gesichert. Grundsätzlich kann der Sensorarm in beliebiger Weise drehfest auf der Sensorwelle befestigt werden, beispielsweise mit Hilfe einer Madenschraube. Das Aufschieben des Sensorarms auf die Sensorwelle ist jedoch besonders einfach. Die Drehfestigkeit der Verbindung kann durch einen nicht-rotationssymmetrischen Querschnitt der Sensorwelle und der komplementären Öffnung im Sensorarm erreicht werden. Die fest angeordnete Begrenzungsfläche kann beispielsweise von einer Lasche gebildet sein, die einteilig mit einem Halter des Sensors ausgebildet ist. Dann kann der Sensorarm bei der Montage auf die Sensorwelle aufgeschoben und der Sensor nachfolgend am Sensorhalter befestigt werden. Diese Montage ist besonders einfach und verhindert wartungsfrei ein unerwünschtes Lösen des Sensorarms von der Sensorwelle.

Gemäß einer Ausgestaltung weist der Sensorarm auf seiner Drehachse eine Kontaktfläche auf, die an der Begrenzungsfläche anliegt. Die Kontaktfläche kann beispielsweise von einem abgerundeten Vorsprung am Sensorarm gebildet werden, so dass ein im Wesentlichen punktförmiger Kontaktbereich zwischen Sensorarm und Begrenzungsfläche erreicht wird, der sich zudem auf der Drehachse befindet. Dadurch können Reibungskräfte im Kontaktbereich minimiert werden, wobei die Leichtgängigkeit der gesamten Anordnung die Langlebigkeit und Genauigkeit vorteilhaft beeinflusst.

Gemäß einer Ausgestaltung ist der mögliche Differenzwinkel zwischen der Antriebsradaufhängung und dem Lagerbauteil durch mindestens einen Anschlag derart begrenzt, dass eine maximale zulässige Bewegung des Gegenstücks gegenüber dem Sensor nicht überschritten wird. Die maximal zulässige Bewegung des Gegenstücks gegenüber dem Sensor wird dabei bestimmt von der Anordnung aus Sensorarm und Gegenstück. Durch den mindestens einen Anschlag wird wirksam verhindert, dass die Anordnung aus Sensorarm und Gegenstück bzw. der Sensor selbst durch Überschreiten eines maximalen Differenzwinkels beschädigt wird, etwa in Folge eines Defekts der Lenkwinkelregeleinrichtung. Außerdem stellt der mindestens eine Anschlag sicher, dass das Flurförderzeug auch bei einem solchen Defekt durch manuelles Verstellen des Lenkwinkels mit dem Lenker möglich ist.

In einer Ausgestaltung ist der mindestens eine Sensor bezüglich der Antriebsradaufhängung fest angeordnet. Der Sensor kann unmittelbar oder mittelbar an der Antriebsradaufhängung, beispielsweise an einem Motor- oder Getriebegehäuse, das mit der Antriebsradaufhängung verbunden ist, befestigt sein.

Durch diese Anordnung des Sensors an der Antriebsradaufhängung wird ein besonders kompakter Aufbau ermöglicht, weil der Sensor nahe der vertikalen Schwenkachse der Antriebsradaufhängung befindlich ist, wodurch der bei einem Schwenken der Antriebsradaufhängung um die vertikale Achse erforderliche Freiraum für den Sensor verringert wird. Außerdem kann ein Anschlusskabel des Sensors, das üblicherweise gemeinsam mit weiteren Kabeln für einen Antriebsmotor von der schwenkbaren Antriebseinheit zu einer rahmenfesten Steuerung geführt ist, fest angeordnet werden, weil zwischen dem Sensor und der Antriebsradaufhängung mit den übrigen Kabeln keine Relativbewegung erfolgt.

Gemäß einer Ausgestaltung erfasst der Sensor den Differenzwinkel berührungslos. Beispielsweise kann ein optischer oder ein induktiver Sensor verwendet werden, der mit einer optischen Markierung oder einer Magnetanordnung am Lagerbauteil zusammenwirkt.

Gemäß einer Ausgestaltung hat die Antriebs- und Lenkvorrichtung einen Sensorarm, der drehfest mit einer Sensorwelle des Sensors verbunden ist, und ein Gegenstück, das bezüglich des Lagerbauteils fest angeordnet ist und mit dem Sensorarm derart zusammenwirkt, dass der Sensorarm mit der Sensorwelle bei einer Relativbewegung zwischen dem Lagerbauteil und der Antriebsradaufhängung gedreht wird. Die gesamte Anordnung ist bevorzugt gemäß einem der Ansprüche 2 bis 12 ausgestaltet. Hinsichtlich der Erläuterung dieser Merkmale wird auf die obigen Ausführungen verwiesen.

Die Erfindung wird nachfolgend anhand eines in Figuren dargestellten Ausführungsbeispiels näher erläutert. Es zeigen:
- Fig. 1: eine Antriebs- und Lenkvorrichtung in einer perspektivischen Ansicht,
- Fig. 2: den Sensor der Vorrichtung aus Fig. 1 mit Halter, Sensorarm und Gleitstück in einer perspektivischen Ansicht,
- Fig. 3: eine Ansicht der Anordnung aus Fig. 2 von unten,
- Fig. 4: die Anordnung aus Fig. 2 bei einer anderen Stellung des Sensorarms in einer perspektivischen Ansicht,
- Fig. 5: die Anordnung aus Fig. 4 in einer Ansicht von unten,
- Fig. 6: die Anordnung der Fig. 2 bei einer anderen Stellung des Sensorarms in einer Ansicht von oben,
- Fig. 7: die Anordnung der Fig. 6 in einer teilweise geschnittenen Darstellung von oben,
- Fig. 8: die Anordnung der Figuren 6 und 7 in einer teilweise geschnittenen Darstellung von unten,
- Fig. 9: die Anordnung der Fig. 6 in einer Ansicht von der Seite,
- Fig. 10: die Anordnung der Fig. 6 von der Seite in einer teilweise geschnittenen Darstellung,
- Fig. 11: den Sensorarm der Antriebs- und Lenkvorrichtung der Fig. 1 in einer perspektivischen Ansicht schräg von oben,
- Fig. 12: den Sensorarm aus Fig. 11 in einer perspektivischen Ansicht schräg von unten,
- Fig. 13: den Sensorarm aus Fig. 11 in einer Ansicht von unten,
- Fig. 14: den Sensorarm aus Fig. 11 in einer Ansicht von der Seite,
- Fig. 15: das Gleitstück der Antriebs- und Lenkvorrichtung der Fig. 1 in einer perspektivischen Ansicht schräg von oben,
- Fig. 16: das Gleitstück der Fig. 15 in einer perspektivischen Ansicht schräg von unten,
- Fig. 17: das Gleitstück der Fig. 15 in einer Ansicht von unten,
- Fig. 18: das Gleitstück der Fig. 15 in einer Ansicht von der Seite.

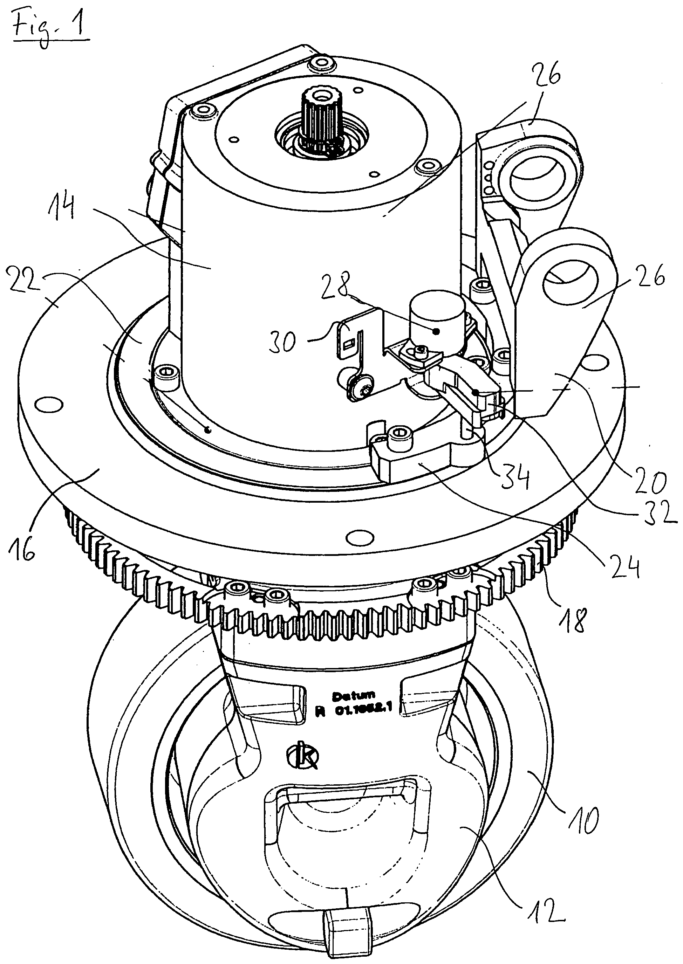

Fig. 1 zeigt eine Antriebs- und Lenkvorrichtung für ein deichselgeführtes Flurförderzeug. Die Antriebs- und Lenkvorrichtung weist ein Antriebsrad 10 auf, das in einer Antriebsradaufhängung 12 um eine horizontale Achse drehbar gelagert ist. Die Antriebsradaufhängung 12 weist ein seitlich des Antriebsrads 10 angeordnetes Bein auf, in dem ein Getriebe angeordnet sein kann. Die Antriebsradaufhängung 12 und das Antriebsrad 10 sind Teil einer Antriebseinheit, die einen Antriebsmotor 14 umfasst. Die gesamte Antriebseinheit ist um eine vertikale Achse schwenkbar in einem Antriebslager gelagert, dessen Lageraußenring 16 mit einem nicht dargestellten Rahmen des Flurförderzeugs fest verbindbar ist.

Mit der Antriebsradaufhängung 12 fest verbunden ist ein Zahnrad 18, das mit einem nicht dargestellten Lenkantrieb zusammenwirkt, um die gesamte Antriebseinheit zwecks Ausführen einer Lenkbewegung um die vertikale Achse zu drehen.

Ein um die gleiche vertikale Achse wie die Antriebseinheit schwenkbares Lagerbauteil wird von einem Deichselbock 20 gebildet, der mit einem Ring 22 eines Zusatzlagers fest verbunden ist. Der Ring 22 und der Deichselbock 20 können unabhängig von der Antriebseinheit in einem nicht dargestellten Rahmen des Flurförderzeugs geschwenkt werden. Der Deichselbock 20 weist einen dem Verlauf des Rings 22 teilweise folgenden, teilringförmigen Befestigungsabschnitt 24 auf, der mit dem Ring 22 verschraubt ist, und zwei vertikal angeordnete, parallele Schenkel 26, zwischen denen eine nicht dargestellte Deichsel um eine horizontale Achse schwenkbar gelagert werden kann.

Ein Sensor 28 ist mit einem Halter 30 an einem Gehäuse des Antriebsmotors 14 befestigt, das seinerseits fest mit der Antriebsradaufhängung 12 verbunden ist. Somit ist der Sensor 28 in einer bezüglich der Antriebsradaufhängung 12 festen Position angeordnet und indirekt an der Antriebsradaufhängung 12 befestigt. Drehfest mit einer in der Fig. 1 nicht erkennbaren Sensorwelle ist ein Sensorarm 32 verbunden. Der Sensorarm 32 wirkt mit einem Mitnehmerstift 34 zusammen, der an dem Befestigungsabschnitt 24 des Deichselbocks befestigt ist. Der Mitnehmerstift 34 ist kreiszylindrisch und vertikal angeordnet. Weitere Einzelheiten des Antriebs- und Lenkvorrichtung sind besser in den Detailzeichnungen erkennbar, in denen dieselben Bezugszeichen verwendet werden wie in der Fig. 1.

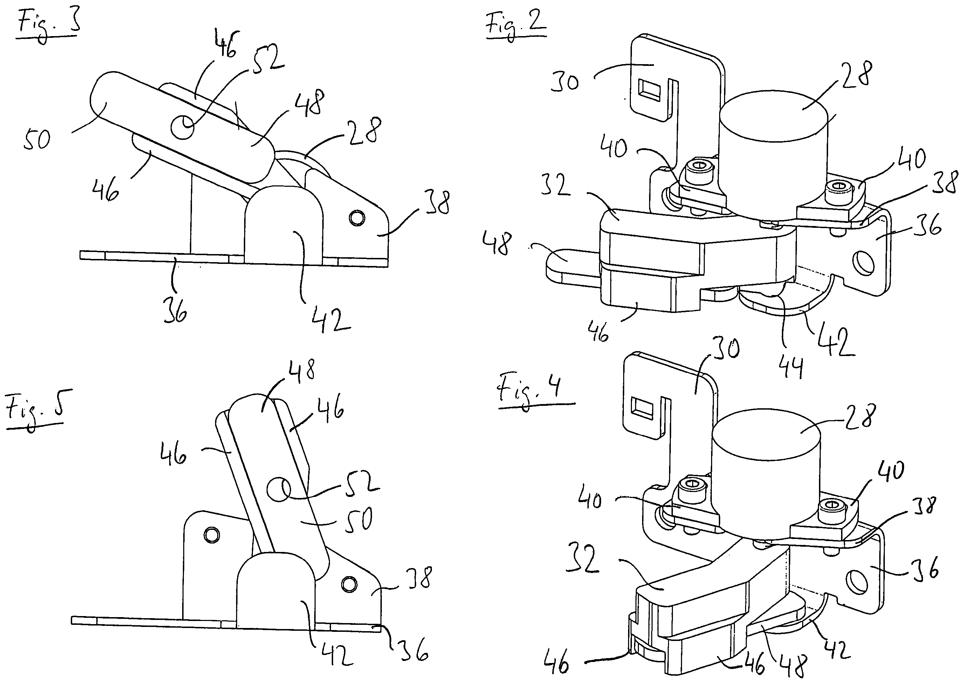

Fig. 2 zeigt insbesondere die Form des Halters 30, der aus einem Blech hergestellt ist. Der Halter weist eine vertikal angeordnete, ebene Platte 36 auf, die mit zwei Befestigungsschrauben am Gehäuse des Antriebsmotors 14 verschraubt wird. An einer oberen Kante der vertikalen Platte 36 schließt sich ein abgewinkelter Befestigungsabschnitt 38 an, der zwei Gewindebohrungen aufweist und mit zwei Befestigungsflanschen 40 des Sensors 28 verschraubt ist. Parallel und in einem Abstand zu dem Befestigungsabschnitt 38 für den Sensor 28 ist an dem Halter eine Lasche 42 ausgebildet, die sich ausgehend von einer unteren Kante der vertikalen Platte 36 in die gleiche Richtung wie der Befestigungsabschnitt 38 erstreckt. Eine in der Fig. 2 nicht erkennbare Sensorwelle des Sensors 28 erstreckt sich vom Sensor 28 aus nach unten und ist im Wesentlichen zwischen dem Befestigungsabschnitt 38 und der Lasche 42 des Halters angeordnet. Der Sensorarm 32 ist auf diese Sensorwelle von unten aufgesteckt und weist unten eine etwa kugelabschnittsförmige Kontaktfläche 44 auf, die an der Oberseite der Lasche 42 anliegt.

Wie am besten in der Fig. 3 zu erkennen ist, weist der Sensorarm 32 an seiner Unterseite zwei in einer Längsrichtung des Sensorarms 32 in einem Abstand zueinander parallel verlaufende Stege 46 auf, zwischen denen ein Gleitstück 48 angeordnet ist. Das Gleitstück 48 hat eine Erweiterung 50, die die Form einer langgestreckten Rechteckscheibe mit abgerundeten Ecken hat. In der Mitte der scheibenförmigen Erweiterung 50 befindet sich eine Bohrung 52, in die der Mitnehmerstift 34 eingreift.

Der Sensorarm 32 erstreckt sich im Wesentlichen in radialer Richtung bezüglich der Sensorwelle nach außen, wobei er eine asymmetrische Form aufweist. Das Gleitstück 48 befindet sich in der in den Figuren 2 und 3 gezeigten Stellung des Sensorarms 32 mit seiner Bohrung 52 relativ nah an dem von der Sensorwelle abgewandten, freien Ende des Sensorarms 32. In dieser Stellung verdeckt der der Sensorwelle zugewandte Abschnitt der scheibenförmigen Erweiterung 50 eine in dem Sensorarm 32 ausgebildete Öffnung, die in der Fig. 3 jedoch nicht erkennbar ist, da sie sich hinter der Erweiterung 48 befindet. In den Figuren 2 und 3 ist der Sensorarm 32 in einem spitzen Winkel zu der vertikalen Platte 36 des Halters 32 ausgerichtet, was einer relativ starken Auslenkung des Sensorarms 32 aus einer mittleren Position entspricht.

Fig. 4 zeigt die Anordnung der Figuren 2 und 3 in einer anderen Stellung des Sensorarms 32, der sich nun annähernd in einem rechten Winkel zur vertikalen Platte 36 des Halters erstreckt und sich in einer mittleren Position befindet. Wie insbesondere in der Fig. 5 erkennbar, ist in dieser Stellung des Sensorarms 32 das Gleitstück 48 so angeordnet, dass ein von der Sensorwelle abgewandter Abschnitt der scheibenförmigen Erweiterung 50 die hier ebenfalls nicht erkennbare Öffnung im Sensorarm 32 verdeckt.

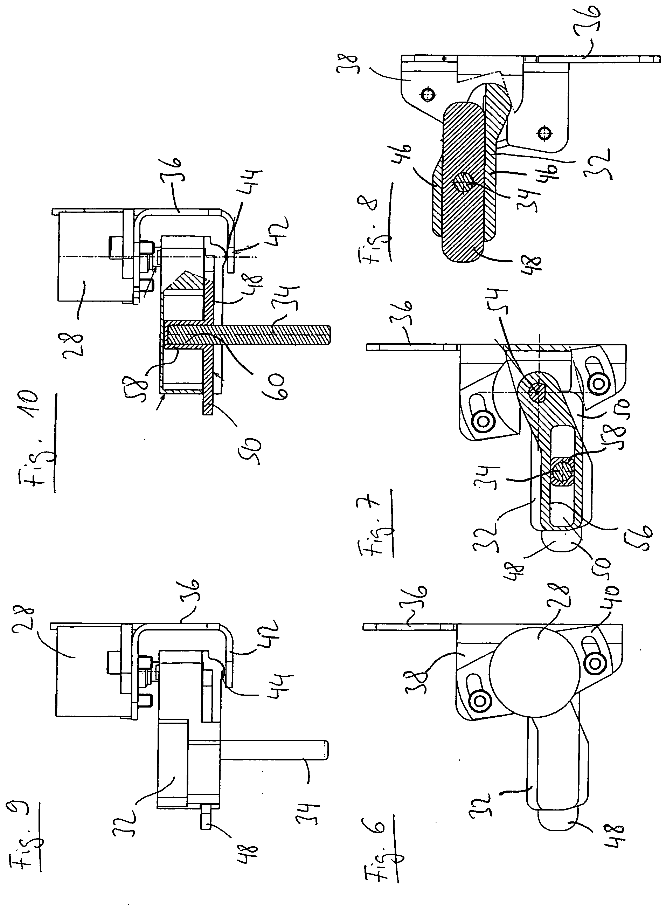

In den Darstellungen der Figuren 6 bis 10 ist eine Längsrichtung des Sensorarms 32, entlang der das Gleitstück verschieblich ist, im rechten Winkel zur vertikalen Platte 36 des Halters 32 angeordnet. In Fig. 6 ist gut erkennbar, dass der Sensorarm 32 nach oben geschlossen ist.

Fig. 7 zeigt einen Querschnitt, der unterhalb einer oberen Wandung des Sensorarms 32 in einer horizontalen Ebene geführt ist. In dieser Ansicht erkennt man an dem dem Sensor 28 zugewandten Ende des Sensorarms 32 die auf einer Seite abgeflachte Sensorwelle 54, die in eine Bohrung mit komplementären Querschnitt im Sensorarm 32 eingesetzt ist. Dadurch ist der Sensorarm 32 drehfest mit der Sensorwelle 54 verbunden. Weiterhin ist eine Kulisse 56 in Form einer Nut mit rechteckigem Querschnitt erkennbar. Mit den seitlichen Begrenzungsflächen der Nut in beidseitig flächigem Kontakt steht ein sich in die Kulisse hinein erstreckender Zapfen 58 des Gleitstücks 48, der einen rechteckigen Querschnitt mit abgerundeten Ecken aufweist. Durch die zusammenwirkenden Führungsflächen an der Kulisse 56 und dem Zapfen 58 ist das Gleitstück beidseitig in der Kulisse 56 zwangsgeführt. Ebenfalls erkennbar ist der Mitnehmerstift 34, der in eine kreiszylindrische Öffnung im Zapfen 58 des Gleitstücks 48 eingreift. Wie ebenfalls in der Fig. 7 gut zu erkennen ist, deckt die scheibenförmige Erweiterung 50 des Gleitstücks 48 die gesamte Öffnung 56 der Kulisse ab. Dabei steht die scheibenförmige Erweiterung 50 seitlich und in Längsrichtung an beiden Enden über die Öffnung der Kulisse 56 über, so dass auch bei einem Verschieben des Gleitstücks 48 in der Kulisse 56 die Öffnung der Kulisse 56 stets von der scheibenförmigen Erweiterung 50 abgedeckt ist.

Fig. 8 zeigt dieselbe Anordnung in einer Ansicht von unten, ebenfalls in einem teilweisen Querschnitt, wobei die horizontal angeordnete Schnittebene hier auf Höhe der scheibenförmigen Erweiterung 50 des Gleitstücks 48 liegt. Erkennbar ist insbesondere, dass die beiden Stege 46 des Sensorarms 32 die scheibenförmige Erweiterung 50 des Gleitstücks 48 an beiden Seiten umgreifen.

Wie in den Figuren 7 und 8 erkennbar, ist die Kulisse 56 in einer Längsrichtung des Sensorarms 32 angeordnet, wobei eine Gerade, auf der das Gleitstück 48 beweglich ist, seitlich an der Sensorwelle 54 vorbei in einem Abstand von dieser verläuft. Wie insbesondere in Fig. 8 gut zu erkennen ist, ermöglicht diese Anordnung eine für das vollständige Abdecken der Kulisse 56 ausreichende Größe der scheibenförmigen Erweiterung 50 des Gleitstücks 48 und gleichzeitig einen geringen Abstand des Gleitstücks von der Sensorwelle, wobei eine Bewegung eines Teils des Gleitstücks an der Sensorwelle 54 vorbei erfolgen kann.

In der Seitenansicht der Fig. 9 ist insbesondere der vertikal angeordnete Mitnehmerstift 34 zu erkennen, ebenso wie die kugelabschnittsförmige Kontaktfläche 44 des Sensorarms 32, die in Anlage mit der Lasche 42 des Halters 32 ist.

Dies ist auch in der Fig. 10 zu erkennen, die zusätzlich das Eingreifen des Mitnehmerstifts 34 von unten in die Bohrung 60 im Gleitstück 48 erkennen lässt. Die Bohrung 60 erstreckt sich durch die scheibenförmige Erweiterung 50 und in den Zapfen 58 des Gleitstücks 48 hinein.

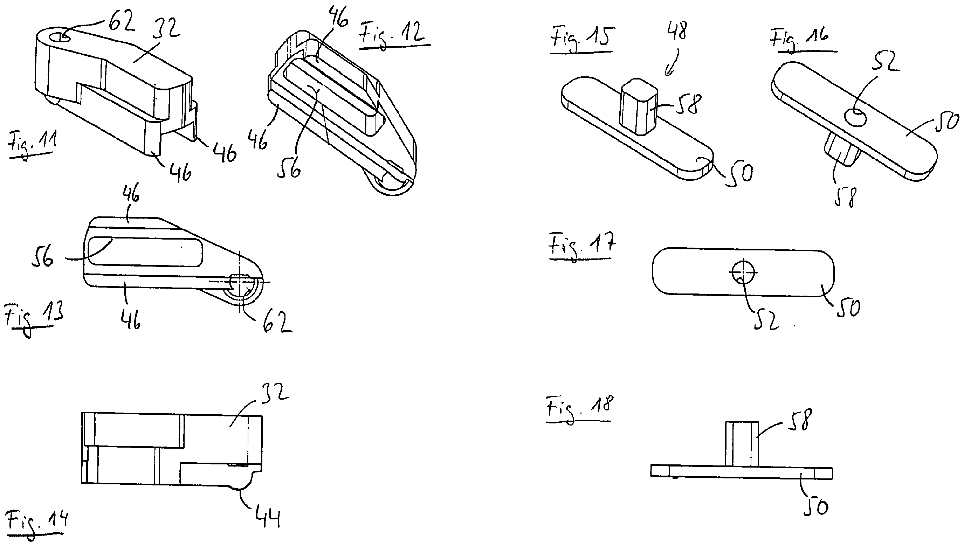

Fig. 11 zeigt den Sensorarm 32. Im oberen Bereich weist der Sensorarm 32 eine annähernd gleichmäßige Breite auf, wobei etwa bezüglich der Längsrichtung des Sensorarms 32 in der Mitte der Verlauf leicht abgewinkelt ist. Dadurch ist der geradlinige, von der Bohrung 62 für die Sensorwelle entfernte Abschnitt des Sensorarms 32 auf einer seitlich von der Sensorwelle 54 beabstandeten Geraden angeordnet. Entlang dieser Geraden verläuft auch die in Fig. 12 erkennbare Kulisse 56, die von einer nach oben abgeschlossenen Nut gebildet wird.

Fig. 13 zeigt den Sensorarm 32 von unten, wobei insbesondere der seitliche Abstand der Kulisse 56 zum Drehpunkt der Sensorwelle 54, der durch ein Kreuz angedeutet ist, erkennbar wird, ebenso wie der seitliche Abstand zwischen den die Kulisse 56 begrenzenden Flächen und den beiden parallel dazu verlaufenden Stegen 46.

Fig. 14 zeigt insbesondere die Anordnung der Kontaktfläche 44 an einer Unterseite des Sensorarms.

In den Figuren 15 bis 18 ist das Gleitstück in unterschiedlichen Ansichten gezeigt. Gut zu erkennen ist die scheibenförmige Erweiterung 50 und der mittig davon nach oben vorstehende Zapfen 58.

## Patentansprüche

1. Antriebs- und Lenkvorrichtung für ein Flurförderzeug mit
• einem Antriebsrad (10), das in einer Antriebsradaufhängung (12), die um eine im Wesentlichen vertikale Achse schwenkbar gelagert ist, drehbar aufgehängt ist,
• einer Lenkeinrichtung, die einen Lenker und ein Lagerbauteil (20) aufweist, das koaxial oder achsparallel zur Antriebsradaufhängung (12) schwenkbar gelagert ist, und
• einer Lenkwinkelregeleinrichtung, die mindestens einen Sensor (28), der bezüglich der Antriebsradaufhängung (12) oder des Lagerbauteils (20) fest angeordnet ist und einen Differenzwinkel zwischen der Antriebsradaufhängung (12) und dem Lagerbauteil (20) erfasst, und einen Lenkantrieb aufweist, mit dem die Antriebsradaufhängung (12) nach Maßgabe des erfassten Differenzwinkels schwenkbar ist, **gekennzeichnet durch**
• einen Sensorarm (32), der drehfest mit einer Sensorwelle (54) des mindestens einen Sensors (28) verbunden ist, und
• ein Gegenstück, das bezüglich des Lagerbauteils (20) bzw. der Antriebsradaufhängung (12) fest angeordnet ist und mit dem Sensorarm (32) derart zusammenwirkt, dass der Sensorarm (32) mit der Sensorwelle (54) bei einer Relativbewegung zwischen dem Lagerbauteil (20) und der Antriebsradaufhängung (20) gedreht wird.

2. Antriebs- und Lenkvorrichtung nach Anspruch 1, **dadurch gekennzeichnet, dass** Gegenstück und Sensorarm (32) Führungsmittel aufweisen, die eine Verschiebung des Gegenstücks gegenüber dem Sensorarm (32) in bezüglich der Sensorwelle (54) tangentialer Richtung verhindern.

3. Antriebs- und Lenkvorrichtung nach Anspruch 1 oder 2, **dadurch gekennzeichnet, dass** der Sensorarm (32) und das Gegenstück jeweils mindestens eine Gleitfläche aufweisen, wobei die mindestens eine Gleitfläche des Sensorarms (32) mit der mindestens einen Gleitfläche des Gegenstücks in flächigem Kontakt steht.

4. Antriebs- und Lenkvorrichtung nach Anspruch 2 oder 3, **dadurch gekennzeichnet, dass** die Führungsmittel einen Mitnehmerstift (34) und eine Kulisse (56) aufweisen, wobei der Mitnehmerstift (34) in der Kulisse (56) beidseitig zwangsgeführt ist.

5. Antriebs- und Lenkvorrichtung nach Anspruch 4, **dadurch gekennzeichnet, dass** der Mitnehmerstift (34) drehbar in einem Gleitstück (48) gelagert ist.

6. Antriebs- und Lenkvorrichtung nach Anspruch 4 oder 5, **dadurch gekennzeichnet, dass** die Kulisse (56) eine einseitig geschlossene Nut aufweist, in die der Mitnehmerstift (34) und/oder das Gleitstück (48) auf der geöffneten Seite eingreift.

7. Antriebs- und Lenkvorrichtung nach Anspruch 5 oder 6, **dadurch gekennzeichnet, dass** das Gleitstück (48) eine Erweiterung (50) aufweist, die orthogonal zu dem Mitnehmerstift (34) angeordnet ist und eine Öffnung der Kulisse (56), in die der Mitnehmerstift (34) und/oder das Gleitstück (48) eingreift, abdeckt.

8. Antriebs- und Lenkvorrichtung nach Anspruch 7, **dadurch gekennzeichnet, dass** die Erweiterung (50) seitlich von Stegen (46) an dem die Kulisse (56) aufweisenden Führungsmittel umschlossen ist.

9. Antriebs- und Lenkvorrichtung nach einem der Ansprüche 1 bis 8, **dadurch gekennzeichnet, dass** das Gegenstück bezüglich des Sensorarms (32) entlang einer Geraden verschieblich ist, die in einem seitlichen Abstand von der Sensorwelle (32) verläuft.

10. Antriebs- und Lenkvorrichtung nach einem der Ansprüche 1 bis 9, **dadurch gekennzeichnet, dass** der Sensorarm (32) auf die Sensorwelle (54) aufgeschoben und von einer bezüglich des Sensors (28) fest angeordneten Begrenzungsfläche gegen ein Abrutschen von der Sensorwelle (54) gesichert ist.

11. Antriebs- und Lenkvorrichtung nach Anspruch 10, **dadurch gekennzeichnet, dass** der Sensorarm (32) auf seiner Drehachse eine Kontaktfläche (44) aufweist, die an der Begrenzungsfläche anliegt.

12. Antriebs- und Lenkvorrichtung nach einem der Ansprüche 1 bis 11, **dadurch gekennzeichnet, dass** der mögliche Differenzwinkel zwischen der Antriebsradaufhängung (12) und dem Lagerbauteil (20) durch mindestens einen Anschlag derart begrenzt ist, dass eine maximal zulässige Bewegung des Gegenstücks gegenüber dem Sensor (28) nicht überschritten wird.

13. Antriebs- und Lenkvorrichtung nach einem der Ansprüche 1 bis 12, **dadurch gekennzeichnet, dass** der mindestens eine Sensor (28) bezüglich der Antriebsradaufhängung (12) fest angeordnet ist.

14. Antriebs- und Lenkvorrichtung nach einem der Ansprüche 1 bis 13, **dadurch gekennzeichnet, dass** der Sensor (28) den Differenzwinkel berührungslos erfasst.

## Claims

1. A drive and steering apparatus for an industrial truck with
• a drive wheel (10), which is rotatably suspended in a drive wheel suspension (12), which is swivel-mounted around a mainly vertical axis,
• a steering device, which has a handlebar and a bearing component (20), which is swivel-mounted coaxially or axially parallel to the drive wheel suspension (12), and
• a steering wheel control device, which has at least one sensor (28), which is permanently arranged with respect to the drive wheel suspension (12) or the bearing component (20) and captures a differential angle between the drive wheel suspension (12) and the bearing component (20), and a steering drive, with which the drive wheel suspension (12) is pivotable as required by the measured differential angle, **characterized by**
• a sensor arm (33), which is connected in a torque-proof manner with a sensor shaft (54) of the at least one sensor (28), and
• a counter piece, which is permanently arranged with respect to the bearing component (20) or the drive wheel suspension (12), respectively, and works together with the sensor arm (32) such that the sensor arm (32) with the sensor shaft (54) is rotated during a relative movement between the bearing component (20) and the drive wheel suspension (20).

2. The drive and steering apparatus according to claim 1, **characterized in that** the counter piece and sensor arm (32) have guide means, which prevent a displacement of the counter piece with respect to the sensor arm (32) in the tangential direction with respect to the sensor shaft (54).

3. The drive and steering apparatus according to claim 1 or 2, **characterized in that** the sensor arm (32) and the counter piece each have at least one gliding surface, wherein the at least one gliding surface of the sensor arm (32) is in surface-to-surface contact with the at least one gliding surface of the counter piece.

4. The drive and steering apparatus according to claim 2 or 3, **characterized in that** the guide means have a driving pin (34) and a gate (56), wherein the driving pin (34) in the gate (56) is forcibly guided on both sides.

5. The drive and steering apparatus according to claim 4, **characterized in that** the driving pin (34) is rotatably mounted in a gliding piece (48).

6. The drive and steering apparatus according to claim 4 or 5, **characterized in that** the gate (56) has a groove that is closed on one side, into which the driving pin (34) and/or the gliding piece (48) engages on the open side.

7. The drive and steering apparatus according to claim 5 or 6, **characterized in that** the gliding piece (48) has an extension (50), which is arranged orthogonally to the driving pin (34) and covers an opening in the gate (56), into which the driving pin (34) and/or the gliding piece (48) engages.

8. The drive and steering apparatus according to claim 7, **characterized in that** the extension (50) is enclosed laterally by bars (46) on the guide means having the gate (56).

9. The drive and steering apparatus according to one of claims 1 through 8, **characterized in that** the counter piece is shiftable with respect to the sensor arm (32) along a straight line, which runs at a lateral distance from the sensor shaft (32).

10. The drive and steering apparatus according to one of claim 1 through 9, **characterized in that** the sensor arm (32) is slid onto the sensor shaft (54) and is safeguarded from slipping off the sensor shaft (54) by a boundary surface permanently arranged with respect to the sensor (28).

11. The drive and steering apparatus according to claim 10, **characterized in that** the sensor arm (32) has a contact surface (44) on its rotational axis, which rests against the boundary surface.

12. The drive and steering apparatus according to one of claims 1 through 11, **characterized in that** the possible differential angle between the drive wheel suspension (12) and the bearing component (20) is restricted by at least one stop such that a maximum permissible movement of the counter piece with respect to the sensor (28) is not exceeded.

13. The drive and steering apparatus according to one of claims 1 through 12, **characterized in that** the at least one sensor (28) is permanently arranged with respect to the drive wheel suspension (12).

14. The drive and steering apparatus according to one of claims 1 to 13, **characterized in that** the sensor (28) measures the differential angle without contact.

## Revendications

1. Dispositif d'entraînement et de braquage pour un chariot de manutention avec
• une roue d'entraînement (10) qui est suspendue à rotation dans une suspension de roue d'entraînement (12) qui est logée à pivotement autour d'un axe essentiellement vertical,
• une installation de braquage qui présente une bielle et un composant de palier (20) qui est logé à pivotement de manière coaxiale ou parallèle à l'axe par rapport à la suspension de roue d'entraînement (12), et
• une installation de régulation d'angle de braquage qui présente au moins un capteur (28) qui est disposé de manière fixe par rapport à la suspension de roue d'entraînement (12) ou au composant de palier (20) et détecte un angle différentiel entre la suspension de roue d'entraînement (12) et le composant de palier (20), et un entraînement de braquage avec lequel la suspension de roue d'entraînement (12) peut être pivotée conformément à l'angle différentiel détecté, **caractérisé par**
• un bras de capteur (32) qui est relié de manière fixe en rotation à un arbre de capteur (54) de l'au moins un capteur (28) et
• une pièce conjuguée qui est disposée de manière fixe par rapport au composant de palier (20) ou à la suspension de roue d'entraînement (12) et coopère avec le bras de capteur (32) de telle sorte que le bras de capteur (32) est tourné avec l'arbre de capteur (54) lors d'un mouvement relatif entre le composant de palier (20) et la suspension de roue d'entraînement (20).

2. Dispositif d'entraînement et de braquage selon la revendication 1, **caractérisé en ce que** la pièce conjuguée et le bras de capteur (32) présentent des moyens de guidage qui empêchent un coulissement de la pièce conjuguée par rapport au bras de capteur (32) dans une direction tangentielle par rapport à l'arbre de capteur (54).

3. Dispositif d'entraînement et de braquage selon la revendication 1 ou 2, **caractérisé en ce que** le bras de capteur (32) et la pièce conjuguée présentent chacun au moins une face de glissement, dans lequel l'au moins une face de glissement du bras de capteur (32) est en contact plan avec l'au moins une face de glissement de la pièce conjuguée.

4. Dispositif d'entraînement et de braquage selon la revendication 2 ou 3, **caractérisé en ce que** les moyens de guidage présentent une broche d'entraînement (34) et une coulisse (56), dans lequel la broche d'entraînement (34) est guidée de manière forcée des deux côtés dans la coulisse (56).

5. Dispositif d'entraînement et de braquage selon la revendication 4, **caractérisé en ce que** la broche d'entraînement (34) est logée à rotation dans une pièce de glissement (48).

6. Dispositif d'entraînement et de braquage selon la revendication 4 ou 5, **caractérisé en ce que** la coulisse (56) présente une rainure fermée d'un côté dans laquelle la broche d'entraînement (34) et/ou la pièce de glissement (48) s'engrène sur le côté ouvert.

7. Dispositif d'entraînement et de braquage selon la revendication 5 ou 6, **caractérisé en ce que** la pièce de glissement (48) présente un élargissement (50) qui est disposé de manière orthogonale à la broche d'entraînement (34) et recouvre une ouverture de la coulisse (56) dans laquelle la broche d'entraînement (34) et/ou la pièce de glissement (48) s'engrène.

8. Dispositif d'entraînement et de braquage selon la revendication 7, **caractérisé en ce que** l'élargissement (50) est entouré latéralement d'entretoises (46) sur le moyen de guidage présentant la coulisse (56).

9. Dispositif d'entraînement et de braquage selon une des revendications 1 à 8, **caractérisé en ce que** la pièce conjuguée est coulissante par rapport au bras de capteur (32) le long d'une droite qui s'étend à un écart latéral de l'arbre de capteur (32).

10. Dispositif d'entraînement et de braquage selon une des revendications 1 à 9, **caractérisé en ce que** le bras de capteur (32) est enfilé sur l'arbre de capteur (54) et sécurisé contre un glissement de l'arbre de capteur (54) par une face de délimitation disposée de manière fixe par rapport au capteur (28).

11. Dispositif d'entraînement et de braquage selon la revendication 10, **caractérisé en ce que** le bras de capteur (32) présente une face de contact (44) sur son axe de rotation qui repose sur la face de délimitation.

12. Dispositif d'entraînement et de braquage selon une des revendications 1 à 11, **caractérisé en ce que** l'angle différentiel éventuel entre la suspension de roue d'entraînement (12) et le composant de palier (20) est limité par au moins une butée de telle sorte qu'un déplacement maximal autorisé de la pièce conjuguée par rapport au capteur (28) n'est pas dépassé.

13. Dispositif d'entraînement et de braquage selon une des revendications 1 à 12, **caractérisé en ce que** l'au moins un capteur (28) est disposé de manière fixe par rapport à la suspension de roue d'entraînement (12).

14. Dispositif d'entraînement et de braquage selon une des revendications 1 à 13, **caractérisé en ce que** le capteur (28) détecte l'angle différentiel sans contact.
